# EUROPÄISCHE PATENTSCHRIFT

(11) **EP 3 482 174 B1**
(45) Veröffentlichungstag und Bekanntmachung des Hinweises auf die Patenterteilung: **28.07.2021**
(21) Anmeldenummer: 17734693.9
(22) Anmeldetag: 26.06.2017
(51) Int. Cl.: G01F 23/296, G01N 9/00, G01N 11/16

(54) **ELEKTROMAGNETISCHE ANTRIEBS-/EMPFANGSEINHEIT FÜR EIN FELDGERÄT DER AUTOMATISIERUNGSTECHNIK**
ELECTROMAGNETIC DRIVE AND RECEIVE UNIT FOR A FIELD DEVICE IN THE AUTOMATION TECHNOLOGY
UNITÉ ÉLECTROMAGNÉTIQUE D'ENTRAÎNEMENT ET DE RECEPTION POUR UN APPAREIL DE TERRAIN DANS LA TECHNOLOGIE DE L'AUTOMATISATION

(30) Priorität: 05.07.2016 DE 102016112308
(43) Veröffentlichungstag der Anmeldung: 15.05.2019
(73) Patentinhaber: Endress+Hauser SE+Co. KG, 79689 Maulburg (DE)
(72) Erfinder: KUHNEN, Raphael, 79418 Schliengen (DE); HENKEL, Ira, 79664 Wehr (DE); FRÜHAUF, Dietmar, 79539 Lörrach (DE)
(74) Vertreter: Andres, Angelika Maria
(86) Internationale Anmeldenummer: PCT/EP2017/065629
(87) Internationale Veröffentlichungsnummer: WO 2018/007177

(56) Entgegenhaltungen:
- EP-A1- 0 949 489
- WO-A1-2007/113011
- WO-A1-2015/028179
- DE-A1- 1 773 815
- GB-A- 2 185 575
- I. N. Bronstein ET AL: "Taschenbuch der Mathematik" In: "Taschenbuch der Mathematik", 1 January 1997 (1997-01-01), XP055731172, ISBN: 978-3-8154-2000-3 pages 588-591,

## Beschreibung

Die Erfindung betrifft eine elektromechanische Wandlereinheit für ein Feldgerät der Automatisierungstechnik und eine Vorrichtung zur Bestimmung und/oder Überwachung zumindest einer Prozessgröße eines Mediums in einem Behältnis mit einer erfindungsgemäßen elektromechanischen Wandlereinheit. Die Prozessgröße ist beispielsweise gegeben durch den Füllstand oder den Durchfluss des Mediums oder auch durch dessen Dichte oder Viskosität. Das Medium befindet sich beispielsweise in einem Behälter, einem Tank, oder auch in einer Rohrleitung.

In der Automatisierungstechnik werden unterschiedlichste Feldgeräte zur Bestimmung und/oder Überwachung zumindest einer Prozessgröße, insbesondere einer physikalischen oder chemischen Prozessgröße, eingesetzt. Dabei handelt es sich beispielsweise um Füllstandsmessgeräte, Durchflussmessgeräte, Druck- und Temperaturmessgeräte, pH-Redoxpotentialmessgeräte, Leitfähigkeitsmessgeräte usw., welche die entsprechenden Prozessgrößen Füllstand, Durchfluss, Druck, Temperatur, pH-Wert bzw. Leitfähigkeit usw. erfassen. Die jeweiligen Messprinzipien sind aus einer Vielzahl von Veröffentlichungen bekannt.

Ein Feldgerät umfasst typischerweise zumindest eine zumindest teilweise und zumindest zeitweise mit dem Prozess in Berührung kommende Sensoreinheit und eine Elektronikeinheit, welche beispielsweise der Signalerfassung, -auswertung und/oder -speisung dient. Als Feldgeräte werden im Rahmen der vorliegenden Anmeldung im Prinzip alle Messgeräte bezeichnet, die prozessnah eingesetzt werden und die prozessrelevante Informationen liefern oder verarbeiten, also auch Remote I/Os, Funkadapter bzw. allgemein elektronische Komponenten, die auf der Feldebene angeordnet sind. Eine Vielzahl solcher Feldgeräte wird von der Anmelderin hergestellt und vertrieben.

In einer Reihe von entsprechenden Feldgeräten kommen elektromechanische Wandlereinheiten zum Einsatz. Beispielsweise seien hier vibronische Sensoren, wie beispielsweise vibronische Füllstands- oder Durchflussmessgeräte genannt, aber auch in Ultraschall-Füllstandsmessgeräten oder -Durchflussmessgeräten werden sie verwendet. Auf jede Gattung von Feldgerät und dessen zugrundeliegendes Messprinzip, für welche eine erfindungsgemäße elektromechanische Wandlereinheit einsetzbar ist, gesondert und detailliert einzugehen, würde den Rahmen der vorliegenden Anmeldung sprengen. Deshalb beschränkt sich der Einfachheit halber die nachfolgende Beschreibung dort, wo auf konkrete Feldgeräte Bezug genommen wird, beispielhaft auf Füllstandsmessgeräte mit einer schwingfähigen Einheit. Entsprechende Feldgeräte werden von der Anmelderin beispielsweise unter der Bezeichnung LIQUIPHANT oder SOLIPHANT vertrieben. Die zugrundeliegenden Messprinzipien sind im Grunde bekannt.

Die schwingfähige Einheit eines solchen, auch als vibronischer Sensor bezeichneten Füllstandsmessgeräts, ist beispielsweise eine Schwinggabel, ein Einstab oder eine Membran. Diese schwingfähige Einheit wird im Betrieb durch eine Antriebs-/Empfangseinheit, üblicherweise in Form einer elektromechanischen Wandlereinheit, beispielsweise in Form einer piezoelektrischen, elektromagnetischen oder auch magnetostriktiven Antriebs-/Empfangseinheit, mittels eines elektrischen Anregesignals zu mechanischen Schwingungen angeregt. Umgekehrt kann die Antriebs-/Empfangseinheit die mechanischen Schwingungen der mechanisch schwingfähigen Einheit empfangen und in ein elektrisches Empfangssignal umwandeln. So kann es sich bei der Antriebs-/Empfangseinheit entweder um eine separate Antriebseinheit und eine separate Empfangseinheit, oder um eine kombinierte Antriebs-/Empfangseinheit handeln.

Zur Anregung der mechanisch schwingfähigen Einheit sind unterschiedlichste, sowohl analoge als auch digitale Verfahren entwickelt worden. In vielen Fällen ist die Antriebs-/Empfangseinheit Teil eines rückgekoppelten elektrischen Schwingkreises, mittels welchem die Anregung der mechanisch schwingfähigen Einheit zu mechanischen Schwingungen erfolgt. Beispielsweise muss für eine resonante Schwingung die Schwingkreisbedingung, gemäß welcher der Verstärkungsfaktor ≥1 sowie alle im Schwingkreis auftretenden Phasen ein Vielfaches von 360° ergeben, erfüllt sein. Dies hat zur Folge, dass eine bestimmte Phasenverschiebung zwischen dem Anregesignal und dem Empfangssignal gewährleistet werden muss. Hierfür sind unterschiedlichste Lösungen bekannt geworden. Prinzipiell kann die Einstellung der Phasenverschiebung beispielsweise durch Verwendung eines geeigneten Filters vorgenommen werden, oder auch mittels eines Regelkreises auf eine vorgebbare Phasenverschiebung, den Sollwert, geregelt werden. Aus der DE102006034105A1 ist beispielsweise bekannt geworden, einen einstellbaren Phasenschieber zu verwenden. Die zusätzliche Integration eines Verstärkers mit einstellbarem Verstärkungsfaktor zur zusätzlichen Regelung der Schwingungsamplitude wurde dagegen in der DE102007013557A1 beschrieben. Die DE102005015547A1 schlägt die Verwendung eines Allpass vor. Die Einstellung der Phasenverschiebung ist außerdem mittels eines sogenannten Frequenzsuchlaufs möglich, wie beispielsweise in der der DE102009026685A1, DE102009028022A1, und DE102010030982A1 offenbart. Die Phasenverschiebung kann aber auch mittels einer Phasenregelschleife (engl. Phase-Locked-Loop, PLL) auf einen vorgebbaren Wert geregelt werden. Ein hierauf basierendes Anregungsverfahren ist Gegenstand der DE00102010030982A1.

Sowohl das Anregesignal als auch das Empfangssignal sind charakterisiert durch ihre Frequenz, Amplitude und/oder Phase. Änderungen in diesen Größen werden dann üblicherweise zur Bestimmung der jeweiligen Prozessgröße herangezogen, wie beispielsweise ein vorgegebener Füllstandes eines Mediums in einem Behälter, oder auch die Dichte und/oder Viskosität eines Mediums. Im Falle eines vibronischen Grenzstandschalters für Flüssigkeiten wird beispielsweise unterschieden, ob die schwingfähige Einheit von der Flüssigkeit bedeckt ist oder frei schwingt. Diese beiden Zustände, der Freizustand und der Bedecktzustand, werden dabei beispielsweise anhand unterschiedlicher Resonanzfrequenzen, also einer Frequenzverschiebung, oder anhand einer Dämpfung der Schwingungsamplitude, erkannt.

Die Dichte und/oder Viskosität wiederum lassen sich mit einem derartigen Messgerät nur ermitteln, wenn die schwingfähige Einheit vom Medium bedeckt ist. Aus der DE10050299A1, der DE102006033819A1 und der der DE102007043811A1 ist bekannt geworden, die Viskosität eines Mediums anhand der Frequenz-Phase-Kurve (φ=g(f)) zu bestimmen. Dieses Vorgehen basiert auf der Abhängigkeit der Dämpfung der schwingfähigen Einheit von der Viskosität des jeweiligen Mediums. Um den Einfluss der Dichte auf die Messung zu eliminieren, wird die Viskosität anhand einer durch zwei unterschiedliche Werte für die Phase verursachten Frequenzänderung bestimmt, also mittels einer Relativmessung. Zur Bestimmung und/oder Überwachung der Dichte eines Mediums wird hingegen gemäß der DE10057974A1 der Einfluss von zumindest einer Störgröße, beispielswese der Viskosität, auf die Schwingungsfrequenz der mechanisch schwingfähigen Einheit ermittelt und kompensiert. In der DE102006033819A1 ist ferner beschrieben, eine vorgebbare Phasenverschiebung zwischen dem Anregesignal und dem Empfangssignal einzustellen, bei welcher Auswirkungen von Änderungen der Viskosität des Mediums auf die mechanischen Schwingungen der mechanisch schwingfähigen Einheit vernachlässigbar sind. Bei dieser Phasenverschiebung lässt sich eine empirische Formel zur Bestimmung der Dichte aufstellen.

Die Antriebs-/Empfangseinheit ist, wie bereits erwähnt, in der Regel als eine elektromechanische Wandlereinheit ausgestaltet. Oftmals umfasst sie zumindest ein piezoelektrisches Element in unterschiedlichsten Ausgestaltungen. Unter Ausnutzung des piezoelektrischen Effekts lässt sich ein vergleichsweise hoher Wirkungsgrad, das ist die Effizienz der Umwandlung der elektrischen in mechanische Energie, erzielen.. Entsprechende piezokeramische Werkstoffe auf PZT-Basis (Bleizirkonattitanat) sind normalerweise für den Einsatz bei Temperaturen bis 300°C geeignet. Zwar gibt es piezokeramische Werkstoffe, die auch bei Temperaturen oberhalb von 300°C ihre piezoelektrischen Eigenschaften bewahren; diese haben jedoch den Nachteil, dass sie deutlich ineffektiver sind als die Werkstoffe auf PZT-Basis. Hinzu kommen deutliche Unterschiede zwischen den thermischen Ausdehnungskoeffizienten von Metallen und keramischen Stoffen, was insbesondere bei hohen Temperaturen nachteilig sein kann.

Aufgrund seiner Funktion als Kraftgeber muss stets eine kraftschlüssige Verbindung des jeweiligen piezoelektrischen Elements mit einer Membran des Sensors, welche zumindest ein Teil der schwingfähigen Einheit ist, gewährleistet sein. Insbesondere bei hohen Temperaturen kommt es aber vermehrt zu großen mechanischen Spannungen, die einen Bruch des piezoelektrischen Elements und damit einhergehend einen Totalausfall des Sensors zur Folge haben können.

Eine Alternative, welche für den Einsatz bei hohen Temperaturen besser geeignet sein kann, stellen sogenannte elektromagnetische Antriebs-/Empfangseinheiten dar, wie beispielsweise in den Druckschriften WO 2007/113011 und WO 2007/114950 A1 beschrieben. Die Umwandlung elektrischer Energie in mechanische Energie erfolgt hierbei über ein Magnetfeld. Eine entsprechende elektromechanische Wandlereinheit umfasst zumindest eine Spule und einen Permanentmagneten. Mittels der Spule wird ein den Magnet durchsetzendes magnetisches Wechselfeld erzeugt, und über den Magneten eine periodische Kraft auf die schwingfähige Einheit übertragen. Üblicherweise überfolgt die Übertragung dieser periodischen Kraft ähnlich dem Prinzip eines Stößels, welcher mittig auf die Membran aufsetzt.

Da bei einer elektromagnetischen Antriebs-/Empfangseinheit keine kraftschlüssige Verbindung mit der Membran der schwingfähigen Einheit notwendig ist, können diese im Vergleich zu piezoelektrischen Wandlereinheiten in einem erweiterten Temperaturbereich, insbesondere zwischen -200°C und 500°C verwendet werden. Allerdings ist infolge des Fehlens einer kraftschlüssigen Verbindung üblicherweise der Wirkungsgrad deutlich geringer als bei piezoelektrischen Antriebs-/Empfangseinheiten. Zwar kann eine elektromagnetische Antriebs-/Empfangseinheit im Bereich der Membran relativ hohe Kräfte entwickeln, jedoch ist die Auslenkung der Schwinggabel infolge der nicht-kraftschlüssigen-Verbindung zwischen Membran und Antrieb vergleichsweise gering. Folglich wird für eine elektromagnetische Antriebs-/Empfangseinheit im Vergleich zu einer piezoelektrischen Antriebs-/Empfangseinheit mehr Energie benötigt, was den Einsatz eines entsprechenden Sensors in explosionsgefährdeten Bereichen problematisch macht.

Eine elektromechanische Wandlereinheit mit einem erhöhten Wirkungsgrad ist in der DE102015104533A1 beschrieben, auf weiche im Folgenden vollumfänglich Bezug genommen wird.

In der DE1773815 und GB2185575A sind jeweils vibronische Sensoren offenbart, bei welchen Stangen zur Schwingungserzeugung und -detektion verwendet werden. Die EP0949489A1 beschreibt einen vibronischen Sensor in Form eines Einstabs, bei welchem innerhalb des Stabs mittig eine stangenförmige Vibrationsvorrichtung an der Membran angebracht ist.

Ausgehend vom Stand der Technik ist es die Aufgabe der vorliegenden Erfindung, eine elektromagnetische Antriebs-/Empfangseinheit, bzw. eine elektromechanische Wandlereinheit mit zumindest einer Spule und einem Magneten vorzuschlagen, welche sich durch einen gegenüber dem Stand der Technik erhöhten Wirkungsgrad auszeichnet.

Diese Aufgabe wird erfindungsgemäß gelöst durch eine elektromechanische Wandlereinheit für ein Feldgerät der Automatisierungstechnik gemäß Anspruch 1, umfassend zumindest
- eine in mechanische Schwingungen versetzbare Membran,
- zumindest drei senkrecht zu einer Grundfläche der Membran an der Membran kraftschlüssig befestigte Stangen,
- ein Gehäuse, wobei die Membran zumindest einen Teilbereich einer Wandung des Gehäuses bildet, und wobei die Stangen ins Gehäuseinnere hineinreichen,
- zumindest drei Magnete, wobei an jeder der zumindest drei Stangen in dem der Membran abgewandten Endbereich jeweils einer der Magnete befestigt ist, und
- eine Spule mit Kern, welche innerhalb des Gehäuses oberhalb der Magnete befestigt ist, und welche Spule mit einem elektrischen Wechselstromsignal beaufschlagbar ist,
wobei die Spule dazu ausgestaltet ist, ein Magnetfeld zu erzeugen, welches Magnetfeld die Stangen mittels der Magnete in mechanische Schwingungen senkrecht zur Längsachse der beiden Stangen versetzt,
wobei die Stangen derart an der Membran befestigt sind, dass aus den Schwingungen der Stangen Schwingungen der Membran resultieren, und wobei zumindest eine der Stangen im Wesentlichen an einem Ort entlang der Grundfläche der Membran an der Membran befestigt ist, an welchem Ort die zweite Ableitung der Auslenkung der Membran aus einer Ruheposition als Funktion des Orts auf der Grundfläche der Membran im Wesentlichen null ist.

Die Umwandlung von elektrischer in mechanische Energie erfolgt über ein magnetisches Wechselfeld, welches mittels der Spule mit Kern erzeugt wird. Ein zu einem festen wählbaren Zeitpunkt im Bereich der Stangen herrschende Magnetfeld bewirkt jeweils eine Auslenkung der einseitig an der Membran befestigten Stangen im der Membran abgewandten Bereich, in welchem die Magnete an den Stangen befestigt sind. Durch das magnetische Wechselfeld werden Stangen also in Schwingungen versetzt, wobei die Schwingungsbewegung der Stangen quer bzw. senkrecht zu deren Längsachse erfolgt. Die Stangen verhalten sich entsprechend quasi wie ein eigener mechanischer Resonator. Durch die Verbindung, insbesondere kraftschlüssige Verbindung, der Stangen mit der Membran wird die Schwingungsbewegung der Stangen auch auf die Membran übertragen, die somit ebenfalls eine Schwingungsbewegung ausführt.

Erfindungsgemäß ist zumindest eine der Stangen im Wesentlichen an einem Ort entlang der Grundfläche der Membran an der Membran befestigt, an welchem Ort die zweite Ableitung der Auslenkung der Membran aus einer Ruheposition als Funktion des Orts auf der Grundfläche im Wesentlichen null ist. An welchen Orten entlang der Grundfläche der Membran die zweite Ableitung der Auslenkung der Membran aus einer Ruheposition im Wesentlichen null ist, hängt unter anderem von der jeweiligen Schwingungsmode der Membran ab.

Zumindest eine der Stangen ist also im Wesentlichen im Bereich eines Wendepunkts der Auslenkung aus der Ruheposition als Funktion des Ortes auf der Membran an derselben befestigt. Die Ruheposition der Membran ist dabei jene Position, in welcher keine resultierende Kraft auf die Membran einwirkt, in welcher die Membran also nicht durchgebogen, sondern im Wesentlichen planar ist.

Durch die erfindungsgemäße Positionierung der Stangen wird eine besonders effiziente Übertragung der Schwingungsbewegungen der Stangen auf die Membran erzielt. Die benötigte Energie zum Betreiben der erfindungsgemäßen Wandlereinheit wird entsprechend vorteilhaft im Vergleich zu äquivalenten elektromechanischen Wandlereinheiten, bei welchen jedoch die Stangen in anderen Bereichen entlang der Grundfläche der Membran befestigt sind, minimiert.

Die erfindungsgemäße elektromechanische Wandlereinheit ist ferner bestens für den Einsatz in einem erweiterten Temperaturbereich, insbesondere für den Einsatz bei hohen Temperaturen, geeignet. Die maximal zulässige Temperatur ist beispielsweise abhängig vom für die Magnete gewählten Material. Da die Stangen in einem Endbereich direkt mit der Membran verbunden sind und einen eigenen mechanischen Resonator bilden, ist der Wirkungsgrad einer erfindungsgemäßen elektromechanischen Wandlereinheit gegenüber den in der Beschreibungseinleitung genannten Varianten für elektromagnetischer auf dem Prinzip eines Stößels beruhenden Antriebs-/Empfangseinheiten aus dem Stand der Technik deutlich erhöht. Trotzdem ist der konstruktive Aufbau einer erfindungsgemäßen elektromechanischen Wandlereinheit vergleichsweise einfach. Die Magnete sind beispielsweise sogenannte Alnico-Magnete. Alnico-Magnete werden mitunter auch als Stahlmagnete bezeichnet. Es handelt sich um Legierungen aus Eisen, Aliminium, Nickel, Kupfer und Cobalt, aus denen durch Gusstechniken oder mittels Sinterprozessen Permanentmagnete hergestellt werden. Unter anderem zeichnen sich derartige Magnete durch eine hohe Remanenzflussdichte (ca. 0.6-1.3T) sowie durch eine hohe Curie-Temperatur von 700-850°C aus, was Anwendungen in einem Temperaturbereich, von mind. bis zu 500°C erlaubt. Eine interessante Alternative stellen gegebenenfalls sogenannte Seltenerdmagnete dar, welche im Wesentlichen aus Eisenmetallen und Seltenerdmetallen bestehen. Beispielsweise ist Samarium-Cobalt, im Folgenden als SmCo-Magnet bezeichnet, derzeit bei Temperaturen bis zu 350° einsetzbar; in der Forschung werden jedoch Bestrebungen unternommen, Einsatztemperaturen von mehr als 500°C zu erreichen. Es versteht sich von selbst, dass aber auch andere Magnete für die vorliegende Erfindung verwendet werden können, welche ebenfalls unter die vorliegende Erfindung fallen. Die Magnete sind beispielsweise stabförmig ausgestaltet. Bevorzugt ist die Form der Magnete in einer Ausgestaltung der Erfindung aber auch an die Form der Spule mit Kern angepasst, insbesondere derart dass jeweils eine der Spule mit Kern zugewandte Oberfläche der Magnete möglichst maximiert und der Abstand zwischen dem jeweiligen Magnet und der Spule mit Kern möglichst gering gewählt wird.

Gemäß einer bevorzugten Ausgestaltung der erfindungsgemäßen Wandlereinheit ist zumindest eine der Stangen im Wesentlichen entlang einer um den Mittelpunkt der Grundfläche der Membran verlaufenden Kreislinie an der Membran angebracht. Diese Wahl ist insbesondere für Schwingungen der Membran in der Grundschwingungsmode, bei welcher der Mittelpunkt der Membran die größte Auslenkung erfährt, vorteilhaft. Aber auch für höhere Schwingungsmoden, bei welchen der Mittelpunkt der Membran die größte Auslenkung erfährt, ist diese Ausgestaltung geeignet. Für höhere Schwingungsmoden treten dabei zunehmend Knotenlinien entlang der Grundfläche der Membran auf.

Eine Ausgestaltung der Erfindung beinhaltet, dass die Anzahl der Stangen eine gerade Zahl ist, wobei die Stangen symmetrisch entlang der Kreislinie um den Mittelpunkt der Membran herum angeordnet sind.

Alternativ ist die Anzahl der Stangen eine ungerade Zahl, wobei die Stangen gleichwinklig entlang der Kreislinie um den Mittelpunkt der Membran herum angeordnet sind.

Es ist von Vorteil, wenn die Spule mit Kern im Wesentlichen oberhalb des Mittelpunktes der Grundfläche der Membran angeordnet ist.

Beispielsweise kann der Kern der Spule Teil einer topfförmigen Ankereinheit sein, welche Ankereinheit einen Boden und eine Umfangswandung aufweist, wobei vom Boden ausgehend und zentrisch ins Innere der Ankereinheit zeigend ein Stutzen befestigt ist, wobei der Stutzen den Kern der Spule bildet, und wobei die Umfangswandung als magnetische Feldrückführung dient. Die Umfangswandung reicht dann beispielsweise bis zu den Stangen, welche die Ankereinheit nicht berühren sollen. Diese Ausgestaltung bietet zum einen bauliche Vorteile, da sowohl der Spulenkern als auch eine Feldrückführung einteilig in Form der Ankereinheit bereitgestellt werden können. Die Feldrückführung sorgt dabei aber ferner auch für eine magnetische Schirmung, was eine erhöhte Störsicherheit zur Folge hat. Die Ankereinheit ist bevorzugt aus einem Material mit großer magnetischer Permeabilität, insbesondere Eisen, Kobalt, oder Kobalteisen, gefertigt oder besteht aus einem metallischen Glas. In Bezug auf eine hohe magnetische Permeabilität eignen sich insbesondere ferromagnetische Materialien mit mindestens µ>100. Beispielsweise liegt die Permeabilität µ von Kobalteisen im Bereich µ_{Kobalteisen}≈10000-150000, die von Kobalt im Bereich µ_{Kobalt}≈100-200 und für Eisen gilt µ_{Eisen}≈300-10000. Insbesondere ist es vorteilhaft, wenn das Material für die Ankereinheit eine möglichst geringe Hysterese aufweist. Die Hysterese sollte zumindest so klein sein, dass das Material der stetigen Ummagnetisierung entsprechend der Frequenz des Anregesignals folgen kann.

Ferromagnetische Materialien sind für den Einsatz bei hohen Temperaturen besonders gut geeignet. Steht die Forderung nach Einsatzbarkeit für besonders hohe Temperaturen dagegen nicht im zentralen Fokus, werden wiederum metallische Gläser, deren magnetische Permeabilität typischerweise im Bereich µ_{Metglas}≈1500-4000 liegt, interessant, da diese eine besonders geringe Hysterese und damit einhergehend geringe Verluste bei der Ummagnetisierung, aufweisen.

Eine bevorzugte Ausgestaltung sieht vor, dass jeder der Magnete zu der Spule mit Kern im Wesentlichen den gleichen Abstand aufweist. Dabei ist es von Vorteil, wenn der Abstand zwischen jedem der Magnete und der Spule mit Kern kleiner als 2mm ist. Diese Angaben beziehen sich auf einen Zeitpunkt, zu welchem gerade kein Magnetfeld anliegt. Damit alle Stangen auf die gleiche Weise in mechanische Schwingungen versetzt werden, sollte der Abstand zwischen jeder der Stangen, bzw. der endseitig an den Stangen befestigten Magnete, und der Spule mit Kern im Wesentlichen gleich sein.

Für eine möglichst hohe Effizienz der Energieübertragung von der Spule mit Kern auf die Stangen gilt es weiterhin, diesen Abstand möglichst klein zu wählen. Dabei gilt es jedoch stets zu beachten, dass die Magnete die Spule mit Kern nicht berühren.

Wenn der Kern der Spule als Teil einer topfförmigen Ankereinheit ausgestaltet ist, reichen die Magnete beispielsweiseberührungslos in die topfförmige Ankereinheit hinein, so dass sie sich im Falle, dass kein Magnetfeld vorhanden ist, im gleichen Abstand zur Spule befinden. Auf diese Weise werden die beiden Magnete vollständig von der magnetischen Feldrückführung umhüllt.

Die erfindungsgemäße Aufgabe wird ferner gelöst durch eine Vorrichtung zur Bestimmung und/oder Überwachung zumindest einer Prozessgröße eines Mediums in einem Behältnis umfassend zumindest
- eine Sensoreinheit mit zumindest einer erfindungsgemäßen elektromechanischen Wandlereinheit, und
- eine Elektronikeinheit,
wobei die elektromechanische Wandlereinheit dazu ausgestaltet ist, die Sensoreinheit mittels eines elektrischen Anregesignals in Form eines elektrischen Wechselstromsignals, mit welchem die Spule beaufschlagt ist, zu mechanischen Schwingungen anzuregen, und die mechanischen Schwingungen der Sensoreinheit zu empfangen und in ein elektrisches Empfangssignal in Form eines elektrischen Wechselstromsignals umzuwandeln, und wobei die Elektronikeinheit dazu ausgestaltet ist, das Anregesignal ausgehend vom Empfangssignal zu erzeugen, und die zumindest eine Prozessgröße zumindest anhand des Empfangssignals zu bestimmen. Die erfindungsgemäße elektromechanische Wandlereinheit ist also im Prinzip eine Antriebs-/Empfangseinheit der erfindungsgemäßen Vorrichtung, oder zumindest ein Teil davon. Die elektromechanische Wandlereinheit kann auch entweder in Form einer quasi separaten Antriebseinheit oder Empfangseinheit eingesetzt werden.

Die Sensoreinheit umfasst ferner bevorzugt eine, insbesondere mechanisch, schwingfähige Einheit. In diesem Fall handelt es sich bei der erfindungsgemäßen Vorrichtung um einen vibronischen Sensor.

Vorteilhaft ist die Länge L der beiden Stangen derart gewählt, dass L=nλ/2+ λ/4, wobei λ die Wellenlänge der sich entlang der ausbreitenden Stangen ausbreitenden Wellen und n eine natürliche Zahl ist. Die Länge der Stangen wird also entsprechend einer gewünschten Anregefrequenz des Anregesignals und entsprechend ihrer Schwingungseigenschaften gewählt. Ferner ist durch die Einstellung der Länge der Stangen und darüber hinaus durch die Ausgestaltung eines Gehäuses der Vorrichtung eine Temperaturentkopplung erzielbar, welche aus der räumlichen Separation, insbesondere der Magnete und Spule mit Kern, vom Prozess resultiert. Die erfindungsgemäße Vorrichtung lässt sich also gezielt an die jeweiligen Prozessanforderungen anpassen. Dies geschieht einerseits durch die Wahl der Länge der Stangen. Darüber hinaus kann aber auch das Gehäuse aus einem Material gefertigt werden, welches sich durch eine gute Wärmeisolation auszeichnet, so dass es zusätzlich die Funktion eines Temperaturdistanzrohres aufweist. Ein größerer Abstand zur Membran, also eine räumliche Separation der Magnete und Spule von der Membran, bewirkt eine Temperaturentkopplung. Auf diese Weise kann der zulässige Temperaturbereich über denjenigen, welcher durch die Magnete definiert ist, nochmals erweitert werden. Hier ist jedoch zu beachten, dass mit zunehmender Länge der Stangen der Wirkungsgrad der Kraftübertragung leicht abnimmt. Somit muss stets zwischen dem gewünschten zulässigen Temperaturintervall und der gewünschten Effizienz abgewogen werden.

Eine Ausgestaltung sieht vor, dass die schwingfähige Einheit zumindest einen Teilbereich der Membran, oder zumindest einen Teilbereich der Membran sowie zumindest einen daran befestigten Schwingstab umfasst. Es handelt sich in diesem Fall bei der schwingfähigen Einheit also um eine Membran, einen Einstab oder eine Schwinggabel.

Die Membran kann einerseits einstückig gearbeitet sein. Im Falle, dass die entsprechend ausgestaltete Vorrichtung eine schwingfähige Einheit umfasst, ist die Membran dann einerseits der elektromagnetischen Wandlereinheit zugeordnet, bildet aber gleichzeitig zumindest einen Teil der schwingfähigen Einheit. Andererseits beinhaltet eine Ausgestaltung, dass die Membran zwei kraftschlüssig miteinander verbundene Teilbereiche aufweist, wobei ein erster Teilbereich der elektromagnetischen Wandlereinheit zugeordnet ist und wobei ein zweiter Teilbereich der schwingfähigen Einheit zugeordnet ist. Die Verbindung zwischen den beiden Teilbereichen kann dann beispielsweise mittels einer Löt-, Schweiß- oder Klebeverbindung hergestellt sein.

Die schwingfähige Einheit ist beispielsweise in einer definierten Position innerhalb des Behältnisses angeordnet ist, derart, dass sie bis zu einer bestimmbaren Eintauchtiefe in das Medium eintaucht. Auf diese Weise lassen sich insbesondere die Prozessgrößen Viskosität und/oder Dichte bestimmen.

Es ist von Vorteil, wenn die Prozessgröße gegeben ist durch einen Füllstand oder den Durchfluss des Mediums in dem Behältnis, oder durch die Dichte oder die Viskosität des Mediums.

Gemäß einer bevorzugten Ausgestaltung der vorliegenden Erfindung ist die schwingfähige Einheit eine Schwinggabel mit zwei Schwingstäben, wobei die elektromechanische Wandlereinheit vier Stangen umfasst, und wobei zwei der vier an der Membran befestigten Stangen der elektromechanischen Wandlereinheit und die beiden an der Membran befestigten Schwingstäbe einander spiegelsymmetrisch bezogen auf die Ebene senkrecht zur Längsachse durch die Stangen und/oder Schwingstäbe gegenüberliegend angeordnet sind. Jeweils ein Schwingstab der schwingfähigen Einheit und eine Stange der elektromechanischen Wandlereinheit verlaufen also im Wesentlichen entlang der gleichen gedachten Linie parallel zu ihren beiden Längsachsen. Insbesondere sind diese beiden Stangen und Schwingstäbe derart angeordnet, dass sie sich im gleichen Abstand zum Mittelpunkt der Grundfläche der Membran senkrecht zur Längsachse der Stangen und Schwingstäbe befinden. Diese symmetrische Anordnung im Falle eines vibronischen Sensors mit einer Schwinggabel als schwingfähiger Einheit erzielt einen besonders hohen Wirkungsgrad.

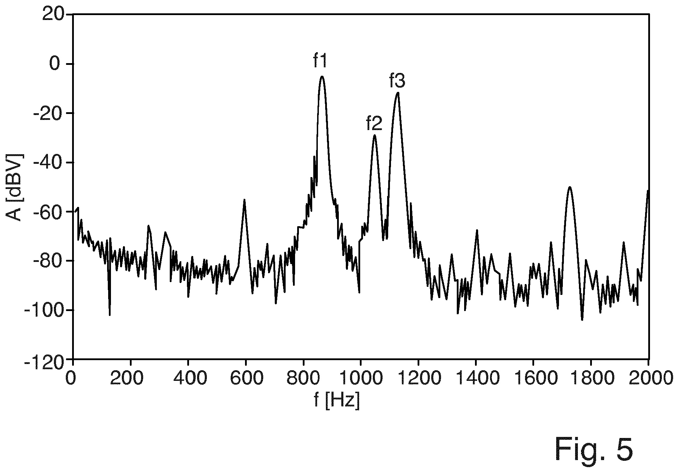

Die Schwingstäbe, Stangen und die Membran bilden ein gekoppeltes Schwingsystem, wobei die Kopplung durch die Membran bestimmt wird. Für das Beispiel einer schwingfähigen Einheit in Form einer Schwinggabel bilden beispielsweise die beiden Schwingstäbe und die Membran einen ersten mechanischen Resonator, die beiden den Schwingstäben gegenüber liegenden Stangen der elektromechanischen Wandlereinheit mit der Membran einen zweiten Resonator und die beiden anderen Stangen und die Membran einen dritten Resonator. Die Frequenz des Anregesignals wird bevorzugt so gewählt, dass der erste und zweite Resonator in einer antisymmetrischen Schwingungsmode bezogen auf die Ebene durch die Membran senkrecht zur Längsachse der Stangen und/oder Schwingstäbe schwingen. In dem, im Prinzip aus drei Resonatoren gebildeten, Schwingsystem treten grundsätzlich drei Resonanzfrequenzen auf. Dies wird in Zusammenhang mit Fig. 5 noch detaillierter beschrieben.

Eine alternative bevorzugte Ausgestaltung der vorliegenden Erfindung sieht ebenfalls vor, dass die schwingfähige Einheit eine Schwinggabel mit zwei Schwingstäben ist. Allerdings umfasst die elektromechanische Wandlereinheit drei Stangen, wobei die drei Stangen in den Eckpunkten eines gleichwinkligen um den Mittelpunkt M der Membran verlaufenden Dreiecks angeordnet sind, derart, dass die Verbindungslinie zwischen zwei der drei Stangen parallel zu einer Verbindungslinie zwischen den beiden Schwingstäben verläuft.

Eine Anordnung zumindest einer der Stangen in einem Bereich der Membran, an einem Ort, an welchem die zweite Ableitung der Auslenkung der Membran aus einer Ruheposition als Funktion des Orts entlang der Grundfläche im Wesentlichen null ist, sorgt für eine besonders hohe Effizienz für die Übertragung der Schwingungen von den Stangen auf die Membran und ggf. auf eine schwingfähige Einheit. Der Wirkungsgrad wächst dabei grundsätzlich mit der Anzahl der jeweils verwendeten Stangen. Jedoch sind einer Maximierung der Anzahl an Stangen jeweils u.a. durch das Platzangebot innerhalb des Gehäuses der Vorrichtung Grenzen gesetzt. Es sei darauf verwiesen, dass die Frequenzen der Schwingungsbewegungen insbesondere durch Einstellung der Länge und/oder Steifigkeit der Stangen beeinflussbar sind.

Die Erfindung sowie ihre vorteilhaften Ausgestaltungen werden nachfolgend anhand der Figuren Fig. 1 - Fig. 5 näher beschrieben. Es zeigt:
Fig. 1: (a) eine schematische Skizze eines vibronischen Sensors und (b) eine perspektivische Ansicht einer Schwinggabel gemäß Stand der Technik,
Fig. 2: (a) eine Seitenansicht einer erfindungsgemäßen elektromechanische Wandlereinheit, sowie eine Ansicht für eine bevorzugte Anordnung der Stangen entlang der Membran im Falle von (b) drei und (c) vier Stangen,
Fig. 3 ein vibronisches Füllstandsmessgerät mit einer Schwinggabel als schwingfähiger Einheit und einer erfindungsgemäßen elektromechanischen Wandlereinheit mit vier Stangen,
Fig. 4: (a) Biegelinien der Membran für das vibronisches Füllstandsmessgerät aus Fig. 3, sowie bevorzugte Anordnungen der Stangen entlang der Grundfläche der Membran im Falle von (b) drei und (c) vier Stangen, und
Fig. 5 ein Frequenzspektrum eines vibronischen Sensors mit einer schwingfähigen Einheit in Form einer Schwinggabel und einer elektromechanischen Wandlereinheit mit vier Stangen.

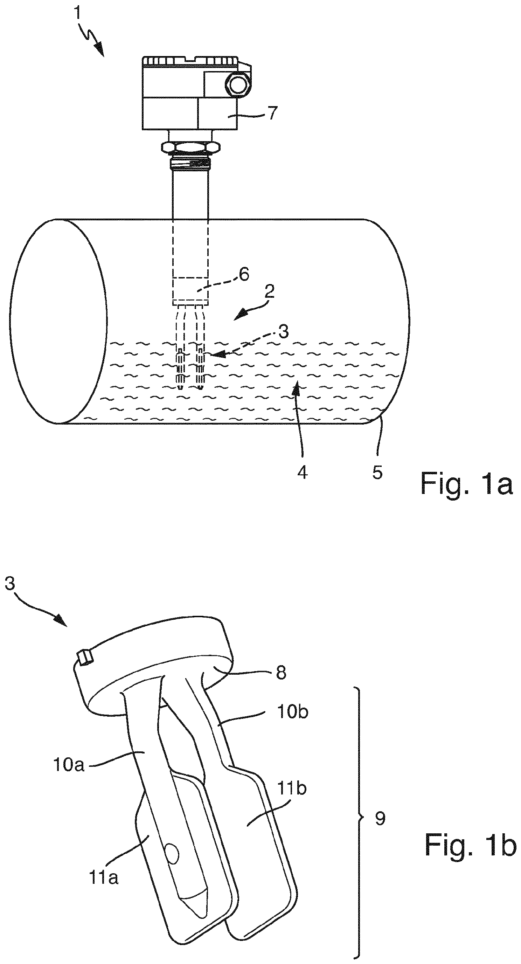

In Fig. 1a ist ein vibronisches Füllstandsmessgerät 1 gezeigt. Eine Sensoreinheit 2 mit einer mechanisch schwingfähigen Einheit 3 in Form einer Schwinggabel taucht teilweise in ein Medium 4 ein, welches sich in einem Behälter 5 befindet. Die schwingfähige Einheit 3 wird mittels der Antriebs-/Empfangseinheit 6, in der Regel einer elektromechanischen Wandlereinheit, zu mechanischen Schwingungen angeregt, und kann beispielsweise ein piezoelektrischer Stapel- oder Bimorphantrieb, aber auch eine elektromagnetische oder auch magnetostriktive Antriebs-/Empfangseinheit sein. Es versteht sich jedoch von selbst, dass auch andere Ausgestaltungen eines vibronischen Füllstandsmessgeräts möglich sind. Weiterhin ist eine Elektronikeinheit 7 dargestellt, mittels welcher die Signalerfassung, -auswertung und/oder -speisung erfolgt.

Fig. 1b zeigt nochmal eine detailliertere Ansicht einer schwingfähigen Einheit 3 in Form einer Schwinggabel, wie sie beispielsweise für den LIQUIPHANT eingesetzt wird. Zu sehen ist eine Membran 8, und ein damit verbundene Schwingelement 9. Das Schwingelement 9 weist zwei Schwingstäbe 10a, 10b auf, an welchen endseitig jeweils ein Paddel 11a, 11b angeformt ist. Im Betrieb führt die Schwinggabel 3 Schwingungsbewegungen entsprechend der Schwingungsmode, mit welcher sie angeregt wird, aus. Jeder der beiden Schwingstäbe 10a, 10b verhält sich im Wesentlichen wie ein sogenannter Biegeschwinger. In der Grundschwingungsmode schwingen die beiden Schwingstäbe 10a, 10b beispielsweise gegenphasig zueinander.

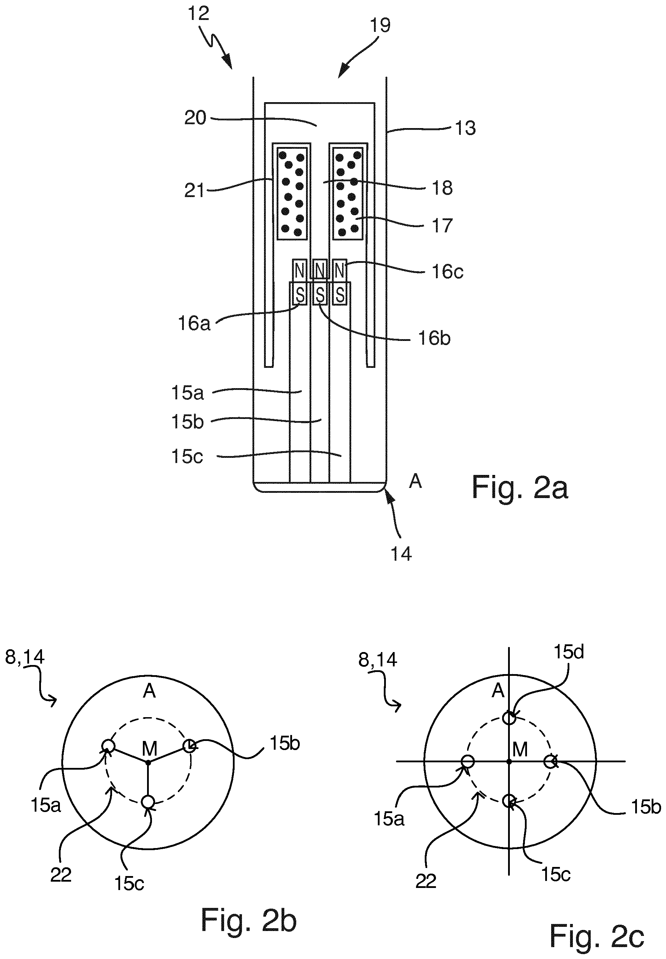

In Fig. 2a ist eine schematische Seitenansicht einer erfindungsgemäßen elektromechanischen Wandlereinheit 12 gezeigt. Die elektromechanische Wandlereinheit 12 stellt in dieser Ausgestaltung die Antriebs-/Empfangseinheit 6 des Messgeräts aus Fig. 1a dar.

In der unteren Wandung eines Gehäuses 13 ist eine Membran 8,14 eingebracht. An dieser Seitenfläche schließt das Gehäuse 13 also mit der Membran 8,14 ab. In diesem Beispiel sei das Gehäuse 13 zylinderförmig und die Membran 8,14 scheibenförmig mit kreisrunder Grundfläche A. Es versteht sich jedoch von selbst, dass auch andere Geometrien denkbar sind und unter die vorliegende Erfindung fallen. Senkrecht zur Grundfläche A der Membran 8,14 und ins Innere des Gehäuses 13 hineinreichend sind drei Stangen 15a, 15b, 15c an der Membran 8,14 befestigt. Dabei handelt es sich insbesondere um eine kraftschlüssige Verbindung. Die Grundfläche A der Membran 8,14 liegt dann in einer Ebene senkrecht zur Längsrichtung der Stangen 15a, 15b, 15c. Beispielsweise sind die Stangen 15a, 15b, 15c gleichwinklig entlang einer gedachten Kreislinie um den Mittelpunkt M der Grundfläche A der Membran 8,14 angeordnet.

In dem der Membran 8,14 abgewandten Endbereich der Stangen 15a, 15b, 15c ist jeweils ein Magnet, insbesondere ein SmCo- oder Alnico-Magnet, 16a, 16b, 16c befestigt. Die Magnete sind bevorzugt alle gleich ausgerichtet bzw. orientiert. Im Falle einer geraden Anzahl von Stangen, beispielsweise im Falle von 4 Stangen, wie in Fig. 2c skizziert, dagegen, können die Magnete 16a-16d aber auch paarweise gleich ausgerichtet sein.

Oberhalb der Magnete 16a, 16b, 16c ist eine Spule 17 mit Kern 18 angeordnet. Die Stangen 15a-15c mit den Magneten 16a-16c berühren dabei die Spule 17 und den Kern 18 nicht. Die Spule 17 wird im fortlaufenden Betrieb zur Erzeugung eines magnetischen Wechselfeldes mit einem Wechselstromsignal beaufschlagt. Aufgrund dieses Wechselfeldes werden die Stangen 15a-15c über die Magnete 16a-16c horizontal, d. h. senkrecht oder quer zu ihrer Längsachse, ausgelenkt derart, dass sie in Schwingungen versetzt werden. Einerseits haben die Stangen 15a-15c dann eine Hebelwirkung, durch welche die durch die horizontale Auslenkung erzeugte Biegung der Stangen 15a-15c auf die Membran 8,14 übertragen wird derart, dass die Membran 8,14 in Schwingungen versetzt wird. Andererseits handelt es sich bei der Kombination aus den beiden Stangen 15a-15c und der Membran 8,14 aber um einen eigenen Resonator. Die Anregung der Membran 8,14 zu mechanischen Schwingungen erfolgt also mittels eines magnetischen Wechselfeldes.

Der Kern 18 der Spule 17 ist ohne Beschränkung der Allgemeinheit in diesem Ausführungsbeispiel Teil einer topfförmigen Ankereinheit 19 mit einem Boden 20 sowie einer Umfangswandung 21. Beispielsweise kann der Boden 20 ebenso wie die Grundfläche A der Membran 8,14 eine kreisförmige Querschnittsfläche aufweisen. Vom Boden 20 der topfförmigen Ankereinheit 19 reicht der Kern 18 der Spule 17 in Form eines Stutzens zentrisch ins Innere der Ankereinheit 19. Die Umfangswandung 21 hat in diesem Falle dann die Funktion einer magnetischen Feldrückführung inne. Die Ankereinheit 19 ist bevorzugt aus einem Material großer magnetischer Permeabilität gefertigt, insbesondere aus Eisen, Kobalt, oder einem metallischem Glas.

Erfindungsgemäß ist zumindest eine der Stangen 15a-15c im Wesentlichen an einem Ort entlang der Grundfläche der Membran 8,14 an der Membran 8,14 befestigt, an welchem Ort die zweite Ableitung der Auslenkung der Membran 8,14 aus einer Ruheposition als Funktion des Orts auf der Grundfläche im Wesentlichen null ist. Im Falle einer kreisrunden Membran 8,14 mit der Grundfläche A, welche Schwingungen in der Grundschwingungsmode ausführt, ist dieser Bereich im Wesentlichen durch eine um den Mittelpunkt M der Membran 8,14 verlaufende Kreislinie 22, wie in Fig. 2b dargestellt, gegeben. Im Falle höherer Schwingungsmoden bilden sich zunehmend Knotenlinien entlang der Membran 8,14 aus, so dass in Abhängigkeit der jeweiligen Schwingungsmode auch mehrere Bereiche entlang der Grundfläche A der Membran 8,14 existieren können, für welche die zweite Ableitung der Auslenkung im Wesentlichen null ist.

Bevorzugte Positionierungen der Stangen 15a-15d entlang der Grundfläche einer Membran 9 mit kreisrunder Grundfläche A für unterschiedliche Anzahlen von Stangen 15a-15d sind in Fig. 2b und Fig. 2c gezeigt. Gemäß des Ausführungsbeispiels aus Fig. 2b umfasst die elektromechanische Wandlereinheit 12 drei jeweils durch einen Kreis angedeutete Stangen 15a, 15b, 15c welche im Bereich der Kreislinie 22 gleichwinklig auf den Kreisumfang bezogen, angeordnet sind. Eine Ausgestaltung mit vier entlang der Kreislinie 22 angeordneten Stangen 15a-15d, wobei sich jeweils zwei Stangen 15a und 15b bzw. 15c und 15d gegenüber liegen, ist dagegen in Fig. 2c dargestellt.

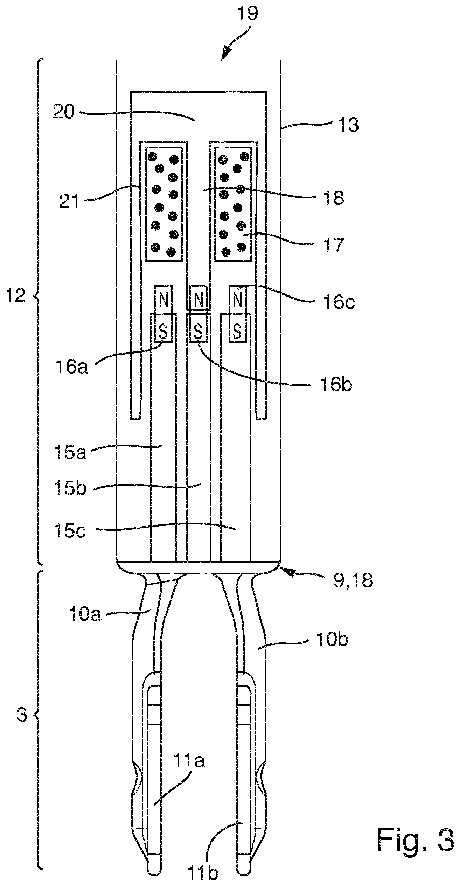

In Fig. 3 ist schließlich schematisch ein vibronisches Füllstandsmessgerät mit einer schwingfähigen Einheit 3 wie in Fig. 1b und einer elektromechanischen Wandlereinheit 12 wie in Fig. 2, jedoch mit vier Stangen 15a-15d (Stange 15d in dieser Darstellung nicht sichtbar) abgebildet. Auf gleiche Bezugszeichen wird deshalb im Folgenden nicht nochmals eingegangen. Die Membran 8,14 der elektromagnetischen Wandlereinheit ist in diesem Beispiel zugleich die Membran 8 der Schwinggabel 3. Es handelt sich also um eine einstückige Membran 8,14, welche sowohl der schwingfähigen Einheit 3 als auch der elektromechanischen Wandlereinheit 12 zugeordnet ist. Es versteht sich jedoch von selbst, dass die Membran 8,14 in einer anderen Ausgestaltung auch aus zwei kraftschlüssig miteinander verbundenen Teilbereichen 8 und 14 gefertigt sein kann, wobei der erste Teilbereich 8 der elektromechanischen Wandlereinheit 12 zugeordnet ist, und der zweite Teilbereich 14 der schwingfähigen Einheit 3.

Bevorzugt sind die beiden Schwingstäbe 10a, 10b und zwei der vier Stangen 15a, 15b derart an der Membran 8,14 befestigt, dass jeweils eine Stange 15a, 15b und ein Schwingstab 10a,10b entlang der gleichen Längsachse, das ist die Achse senkrecht zur Grundfläche A durch die Membran 8,14, verlaufen. Dabei schneiden die beiden Längsachsen die Ebene parallel zur Membran 8,14 im gleichen Abstand zum Mittelpunkt M dieser Fläche A. Durch diese symmetrische Anordnung kann ein erhöhter Wirkungsgrad erzielt werden.

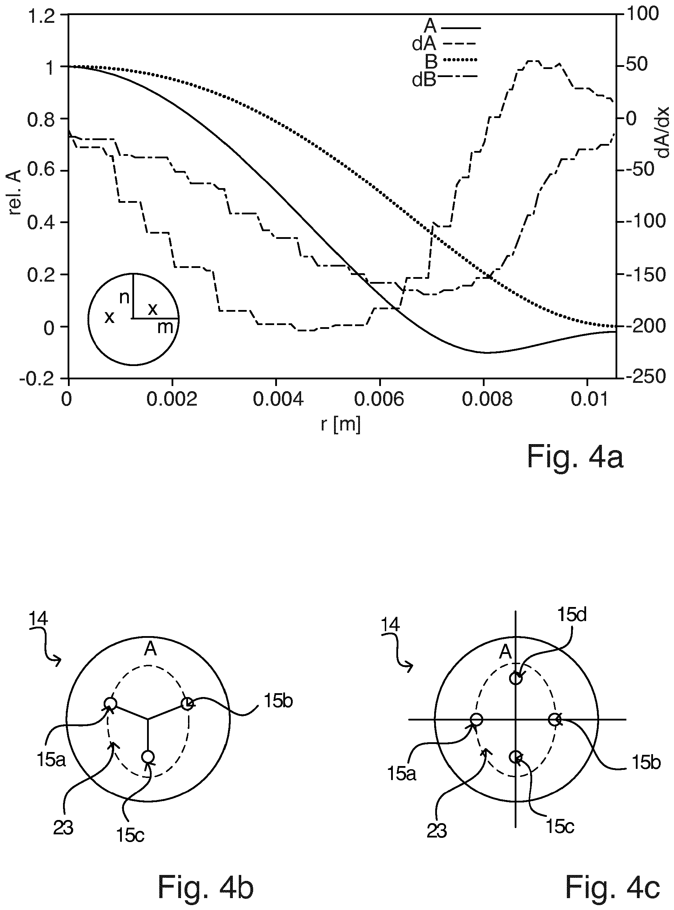

Bei einer derartigen Anordnung handelt es sich um ein gekoppeltes Resonatorsystem. Für das Beispiel mit vier Stangen 15a-15d bilden die beiden Schwingstäbe 10a, 10b der schwingfähigen Einheit 3 mit der Membran 8,14 einen ersten mechanischen Resonator, während die beiden Stangen 15a,15b bzw. 15c,15d mit der Membran 8,14 jeweils einen zweiten bzw. dritten mechanischen Resonator bilden. Alle drei Resonatoren sind über die Membran 8,14 mechanisch miteinander gekoppelt, wobei die Kopplung über die Ausgestaltung der Membran 8,14 einstellbar ist. Beispielsweise kann die Kopplung über die Dicke, oder das Material der Membran 8,14 beeinflusst werden, aber auch durch die jeweilige Verbindung mit den Schwingstäben 10a, 10b oder Stangen 15a-15d. In einem derartigen Resonatorsystem treten mehrere Schwingungsmoden mit unterschiedlichen Resonanzfrequenzen auf, was im Folgenden anhand von Fig. 4 und Fig. 5 erläutert wird. Es sei darauf verwiesen, dass dagegen im Falle, dass der elektromechanischen Wandlereinheit 12 keine schwingfähige Einheit 3 zugeordnet ist, die vier Stangen 15a-15d üblicherweise einen einzigen Resonator bilden.

Das Vorhandensein einer mechanisch schwingfähigen Einheit 3 in Form einer Schwinggabel an die schwingende Membran 8,14, wie in Fig. 2 dargestellt, führt also zu einem geänderten Schwingungsverhalten der Vorrichtung 1. Dies wird beispielsweise anhand der in Fig. 4a gezeigten Biegelinien der Membran 8,14 von deren Mittelpunkt M aus bis zum Rand entlang der beiden Linien m und n deutlich, wobei die Linie m parallel zu einer gedachten Verbindungslinie entlang der Grundfläche A der Membran 8,14 durch die beiden Schwingstäbe 10a und 10b, und Linie n senkrecht zu Linie m verläuft.. Die beiden Schwingstäbe 10a, 10b sind hier durch die beiden Kreuze angedeutet. Die Biegelinien entlang den Linien n und m sind, im Gegensatz zur Ausgestaltung gemäß Fig. 2 nicht mehr symmetrisch. Das kommt insbesondere dadurch zustande, dass sich die Steifigkeiten der Membran 8,14 entlang der beiden Linien m und n voneinander unterscheiden. Es ist folglich unter anderem so, dass die Orte entlang der Grundfläche A der Membran 8,14, an welchen die zweite Ableitung der Auslenkung der Membran 8,14 aus ihrer Ruheposition im Wesentlichen gleich null ist, nicht mehr durch eine Kreislinie 22, sondern durch eine Ellipse 23 gegeben sind.

Für eine möglichst effiziente Energieübertragung von den Stangen 15a-15d auf die Membran 8,14 ist es entsprechend vorteilhaft, die Stangen 15a-15d entlang der um den Mittelpunkt M der Grundfläche A der Membran 8,14 verlaufenden Ellipse 23 anzuordnen. Dann wären alle Stangen 15a-15d im Bereich eines Ortes, an welchem Ort die zweite Ableitung der Auslenkung der Membran 8, 14 aus einer Ruheposition als Funktion des Orts entlang der Grundfläche im Wesentlichen null ist, angeordnet, also dort, wo die Stangen 15a-15d je im an der Membran 8,14 befestigten Bereich eine maximale Auslenkung erfahren. Weiterhin ist es vorteilhaft, wenn der Abstand jeder der Stangen 15a-15d zu einer bevorzugt oberhalb des Mittelpunktes M der Grundfläche A der Membran 8,14 angeordneten Spule mit Kern im Wesentlichen gleich ist, damit die Stangen 15a-15d gleichmäßig in Schwingungen versetzbar sind. Will man den besten Kompromiss zwischen diesen beiden Forderungen finden, bieten sich beispielsweise die in den Figuren Fig. 4b-Fig. 4c dargestellten, bevorzugten Anordnungen für den Fall einer elektromechanischen Wandlereinheit 12 mit drei und vier Stangen 15a-15d an.

Im Falle von drei Stangen 15a-15c sind diese in den Eckpunkten eines gleichwinkligen um den Mittelpunkt M der Membran 8,14 verlaufenden Dreiecks angeordnet, wie in Fig. 4b gezeigt. Die Verbindungslinie zwischen zwei 15a,15b der drei Stangen 15a-15c verläuft parallel zu einer Verbindungslinie zwischen den beiden Schwingstäben 10a,10b. Für die Ausführung gemäß Fig. 4b sind die beiden Stangen 15a, 15b ferner an einem Ort entlang der Grundfläche A der Membran 8,14 angeordnet, an welchem die zweite Ableitung der Auslenkung der Membran 8,14 aus der Ruheposition also im Wesentlichen null ist. Alternativ ist es ebenso denkbar, dass lediglich eine der drei Stangen 15a-15c an einem Ort entlang der Grundfläche A der Membran 8,14 angeordnet ist, an welchem die zweite Ableitung der Auslenkung der Membran 8,14 im Wesentlichen null ist. Dann verläuft bevorzugt die Verbindungslinie zwischen den beiden jeweils anderen der drei Stangen 15a-15c parallel zu einer Verbindungslinie zwischen den beiden Schwingstäben 10a, 10b.

Wie aus Fig. 4c ersichtlich, werden im Fall von vier Stangen 15a-15 die Stangen 15a-15d dagegen, ähnlich wie im Falle einer Membran 8,14 wie in Fig. 2, bevorzugt entlang einer Kreislinie um den Mittelpunkt M der Grundfläche A der Membran 8,14 herum angeordnet, so dass sich jeweils zwei der vier Stangen 15a-15d einander in Bezug auf den Mittelpunkt M der Grundfläche A der Membran 8,14 gegenüber liegen. Dies hat zu Folge, dass jedoch im Gegensatz zur Ausgestaltung gemäß Fig. 2, für dieses Beispiel lediglich zwei der vier Stangen 15a-15d an einem Ort entlang der Grundfläche Ader Membran 8,14 angeordnet, an welchem die zweite Ableitung der Auslenkung im Wesentlichen null ist, da diese Orte die Ellipse 23 beschreiben.

Es handelt es sich also bei einer Vorrichtung 1 mit einer schwingfähigen Einheit 3 und einer erfindungsgemäßen elektromechanischen Wandlereinheit 12 um ein gekoppeltes Resonatorsystem mit mehreren Resonanzfrequenzen, ähnlich dem in der noch nicht veröffentlichten deutschen Patentanmeldung mit dem Aktenzeichen 102015104533.8 beschriebenen System. Der Einfachheit halber wird ein derartiges gekoppeltes Resonatorsystem im Folgenden anhand Fig. 5 für den Fall einer elektromechanischen Wandlereinheit 12 mit vier Stangen 15a-15d, wie in Fig. 4c, erläutert. Für den Fall einer ungeraden Anzahl an Stangen, insbesondere im Falle von drei Stangen 15a-15c, gelten ähnliche Überlegungen. Es sei jedoch darauf verwiesen, dass im Vergleich zu einer Anordnung mit einer geraden Anzahl an Stangen 15a-15d jedoch, insbesondere aufgrund der jeweiligen Symmetrien der Anordnungen, verhältnismäßig komplexere Schwingungsmoden auftreten können.

In einem gekoppelten Resonatorsysten mit vier Stangen 15a-15d und einer schwingfähigen Einheit 3 in Form einer Schwinggabel treten drei Resonanzfrequenzen auf welche jeweils zu einer antisymmetrischen und zwei symmetrischen Schwingungsmoden gehören, wie aus dem an Luft aufgenommen Frequenzspektrum in Fig. 5 ersichtlich. Die antisymmetrische Schwingungsmode f1 liegt für dieses beispielhafte Frequenzspektrum bei ca. 864 Hz, während die beiden symmetrischen Schwingungsmoden f2 und f3 bei 1050 Hz und bei 1135Hz liegen. Bei der antisymmetrischen Schwingungsmode mit der Frequenz f1 bewegen sich die Stangen 15a-15d im der Membran 8,14 abgewandten Bereich aufeinander zu, wenn sich die beiden Schwingstäbe 10a, 10b im Bereich der Paddel 11a, 11b voneinander wegbewegen. Diese Schwingungsmode entspricht der natürlichen Schwingungsbewegung der Schwinggabel 3, beispielsweise einer Schwinggabel 3, welche in einem LIQUIPHANTEN eingesetzt wird. Bei den symmetrischen Schwingungsmoden dagegen bewegen sich die beiden Schwingstäbe 10a, 10b im Bereich der Paddel 11a, 11b ebenfalls aufeinander zu, wenn sich die Stangen 15a-15d im der Membran 8,14 abgewandten Bereich aufeinander zu bewegen. Für die symmetrischen Schwingungsmoden mit den Resonanzfrequenzen f2 und f3 ist jeweils die Schwingungsamplitude eines der beiden Stangenpaare 15a und 15b bzw. 15c und 15d leicht stärker als die des jeweils anderen Stangenpaares. Falls die Resonanzfrequenzen der einzelnen Schwingungsmoden f1-f3 nah genug beieinander liegen, ist dies jedoch unerheblich und die Stangen 15a-15d und die Schwingstäbe 10a, 10b schwingen im Wesentlichen mit gleicher Amplitude.

### Bezugszeichenliste

- 1: Vibronischer Sensor
- 2: Sensoreinheit
- 3: Schwingfähige Einheit
- 4: Medium
- 5: Behältnis
- 6: Antriebs-/Empfangseinheit
- 7: Elektronikeinheit
- 8: Membran der schwingfähigen Einheit
- 9: Schwingelement
- 10a, 10b: Schwingsäbe
- 11a, 11b: Paddel
- 12: elektromechanische Wandlereinheit
- 13: Gehäuse der elektromechanischen Wandlereinheit
- 14: Membran der elektromechanischen Wandlereinheit
- 15a-15d: Stangen
- 16a-16d: Magnete
- 17: Spule
- 18: Kern der Spule
- 19: topfförmige Ankereinheit
- 20: Boden
- 21: Umfangsbewandung
- 22: Kreislinie
- 23: Ellipse

- A: Grundfläche der Membran
- M: Mittelpunkt der Membran
- L: Länge der Stangen
- λ: Wellenlänge der sich entlang der Stangen ausbreitenden Wellen

## Patentansprüche

1. Elektromechanische Wandlereinheit (12) für ein Feldgerät (1) der Automatisierungstechnik umfassend zumindest
- eine in mechanische Schwingungen versetzbare Membran (14),
- zumindest drei senkrecht zu einer Grundfläche (A) der Membran (14) kraftschlüssig an der Membran (14) befestigte Stangen (15a, 15b, 15c),
- ein Gehäuse (13), wobei die Membran (14) zumindest einen Teilbereich einer Wandung des Gehäuses (13) bildet, und wobei die Stangen (15a, 15b, 15c) ins Gehäuseinnere hineinreichen,
- zumindest drei Magnete (16a, 16b, 16c), wobei jeweils ein Magnet (16a, 16b, 16c) in dem der Membran (14) abgewandten Endbereich an jeder der zumindest drei Stangen (15a, 15b, 15c) befestigt ist, und
- eine Spule (17) mit Kern (18), welche innerhalb des Gehäuses (13) oberhalb der Magnete (16a, 16b, 16c) befestigt ist, und welche Spule (17) mit einem elektrischen Wechselstromsignal beaufschlagbar ist,
wobei die Spule (17) dazu ausgestaltet ist, ein Magnetfeld zu erzeugen, welches Magnetfeld die Stangen (15a, 15b, 15c) mittels der Magnete (16a, 16b, 16c) in mechanische Schwingungen senkrecht zur Längsachse der beiden Stangen (10a,10b) versetzt,
wobei die Stangen ((15a, 15b, 15c) derart an der Membran (14) befestigt sind, dass aus den Schwingungen der Stangen (15a, 15b, 15c) Schwingungen der Membran (14) resultieren, wobei zumindest eine der Stangen (15a, 15b, 15c) an einem Ort (22 23) entlang der Grundfläche (A) der Membran (14) an der Membran (14) befestigt ist,
an welchem Ort (22, 23) die zweite Ableitung der Auslenkung der Membran (14) aus einer Ruheposition, als Funktion des Orts auf der Grundfläche (A) im Wesentlichen null ist.

2. Elektromechanische Wandlereinheit (12) nach Anspruch 1,
**dadurch gekennzeichnet,**
**dass** zumindest eine der Stangen (15a, 15b, 15c) im Wesentlichen entlang einer um den Mittelpunkt (M) der Grundfläche (A) der Membran (14) verlaufenden Kreislinie (22) an der Membran (14) angebracht ist.

3. Elektromechanische Wandlereinheit (12) nach Anspruch 2,
**dadurch gekennzeichnet,**
**dass** die Anzahl der Stangen (15a, 15b, 15c) eine gerade Zahl ist, wobei die Stangen (15a, 15b, 15c) symmetrisch entlang der Kreislinie (22) um den Mittelpunkt (M) der Membran (14) herum angeordnet sind.

4. Elektromechanische Wandlereinheit (12) nach Anspruch 2,
**dadurch gekennzeichnet,**
**dass** die Anzahl der Stangen (15a, 15b, 15c) eine ungerade Zahl ist, wobei die Stangen (15a, 15b, 15c) gleichwinklig entlang der Kreislinie (22) um den Mittelpunkt (M) der Membran (14) herum angeordnet sind.

5. Elektromechanische Wandlereinheit (12) nach zumindest einem der vorhergehenden Ansprüche,
**dadurch gekennzeichnet,**
**dass** die Spule (17) mit Kern (18) im Wesentlichen oberhalb des Mittelpunktes (M) der Grundfläche (A) der Membran (14) angeordnet ist.

6. Elektromechanische Wandlereinheit (12) nach Anspruch 5,
**dadurch gekennzeichnet,**
**dass** jeder der Magnete (16a, 16b, 16c) zu der Spule (17) mit Kern (18) im Wesentlichen den gleichen Abstand aufweist.

7. Elektromechanische Wandlereinheit (12) nach Anspruch 6,
**dadurch gekennzeichnet,**
**dass** der Abstand zwischen jedem der Magnete (16a, 16b, 16c) und der Spule (17) mit Kern (18) kleiner als 2mm ist.

8. Vorrichtung (1) zur Bestimmung und/oder Überwachung zumindest einer Prozessgröße eines Mediums (4) in einem Behältnis (5) umfassend zumindest
- eine Sensoreinheit (2) mit zumindest einer elektromechanischen Wandlereinheit (12) nach zumindest einem der vorhergehenden Ansprüche, und
- eine Elektronikeinheit (7),
wobei die elektromechanische Wandlereinheit (12) dazu ausgestaltet ist, die Sensoreinheit (2) mittels eines elektrischen Anregesignals in Form eines elektrischen Wechselstromsignals, mit welchem die Spule (17) beaufschlagt ist, zu mechanischen Schwingungen anzuregen, und die mechanischen Schwingungen der Sensoreinheit (2) zu empfangen und in ein elektrisches Empfangssignal in Form eines elektrischen Wechselstromsignals umzuwandeln, und
wobei die Elektronikeinheit (7) dazu ausgestaltet ist, das Anregesignal ausgehend vom Empfangssignal zu erzeugen, und die zumindest eine Prozessgröße zumindest anhand des Empfangssignals zu bestimmen.

9. Vorrichtung nach Anspruch 8,
wobei die Sensoreinheit (2) eine schwingfähige Einheit (3) umfasst.

10. Vorrichtung nach zumindest einem der Ansprüche 8 oder 9,
wobei die schwingfähige Einheit (3) zumindest einen Teilbereich der Membran (8,14), oder zumindest einen Teilbereich der Membran (8,14) sowie zumindest einen daran befestigten Schwingstab (10a, 10b) umfasst.

11. Vorrichtung nach zumindest einem der Ansprüche 8-10,
wobei die Prozessgröße gegeben ist durch einen Füllstand oder den Durchfluss des Mediums (4) in dem Behältnis (5), oder durch die Dichte oder die Viskosität des Mediums (4).

12. Vorrichtung nach zumindest einem der Ansprüche 8-11,
wobei die schwingfähige Einheit (3) eine Schwinggabel mit zwei Schwingstäben (10a, 10b) ist, wobei die elektromechanische Wandlereinheit (12) vier Stangen (15a-15d) umfasst, und wobei zwei (15a, 15b) der vier an der Membran (8,14) befestigten Stangen (15a-15d) der elektromechanischen Wandlereinheit (12) und die beiden an der Membran (8,14) befestigten Schwingstäbe (10a, 10b) einander spiegelsymmetrisch bezogen auf die Ebene senkrecht zur Längsachse durch die Stangen (15a, 15b) und/oder Schwingstäbe(10a, 10b) gegenüberliegend angeordnet sind.

13. Vorrichtung nach zumindest einem der Ansprüche 8-11,
wobei die schwingfähige Einheit (3) eine Schwinggabel mit zwei Schwingstäben (10a, 10b) ist, wobei die elektromechanische Wandlereinheit (12) drei Stangen (15a-15c) umfasst, und wobei die drei Stangen (15a-15c) in den Eckpunkten eines gleichwinkligen um den Mittelpunkt (M) der Membran (8,14) verlaufenden Dreiecks angeordnet sind, derart, dass die Verbindungslinie zwischen zwei (15a,15b) der drei Stangen (15a-15c) parallel zu einer Verbindungslinie zwischen den beiden Schwingstäben (10a,10b) verläuft.

## Claims

1. Electromechanical transducer unit (12) for a field device (1) used in automation engineering, wherein said unit comprises at least
- a membrane (14) which can be caused to vibrate mechanically,
- at least three rods (15a, 15b, 15c) which are fixed by a non-positive connection to the membrane (14) in a manner that is perpendicular to a basic surface (A) of the membrane (14),
- a housing (13), wherein the membrane (14) forms at least a subsection of a wall of the housing (13), and wherein the rods (15a, 15b, 15c) extend into the housing interior,
- at least three magnets (16a, 16b, 16c), wherein, in each case, one magnet (16a, 16b, 16c) is fixed to each of the at least three rods (15a, 15b, 15c) in the end area facing away from the membrane (14), and
- a coil (17) with a core (18), wherein said coil is fixed inside the housing (13) above the magnets (16a, 16b, 16c), and wherein an electrical alternative current signal can be applied to said coil (17),
wherein the coil (17) is designed to generate a magnetic field, wherein said magnetic field causes the rods (15a, 15b, 15c) to produce mechanical vibrations perpendicular to the longitudinal axis of the two rods (10a, 10b) using the magnets (16a, 16b, 16c),
wherein the rods (15a, 15b, 15c) are fixed to the membrane (14) in such a way that the vibrations of the membrane (14) result from the vibrations of the rods (15a, 15b, 15c), wherein at least one of the rods (15a, 15b, 15c) is fixed to the membrane (14) at a position (22, 23) along the basic surface (A) of the membrane (14),
wherein at said position (22, 23) the second derivative of the deflection of the membrane (14) from a rest position, as a function of the position on the basic surface (A), is essentially zero.

2. Electromechanical transducer unit (12) as claimed in Claim 1,
**characterized in that**
at least one of the rods (15a, 15b, 15c) is fixed to the membrane (14) essentially along a circular line (22) extending around the center (M) of the basic surface (A) of said membrane (14).

3. Electromechanical transducer unit (12) as claimed in Claim 2,
**characterized in that**
the number of rods (15a, 15b, 15c) is an even number, wherein said rods (15a, 15b, 15c) are arranged symmetrically along the circular line (22) around the center (M) of the membrane (14).

4. Electromechanical transducer unit (12) as claimed in Claim 2,
**characterized in that**
the number of rods (15a, 15b, 15c) is an uneven number, wherein said rods (15a, 15b, 15c) are arranged in an equiangular manner along the circular line (22) around the center (M) of the membrane (14).

5. Electromechanical transducer unit (12) as claimed in at least one of the previous claims, **characterized in that**
the coil (17) with the core (18) is arranged essentially above the center (M) of the basic surface (A) of the membrane (14).

6. Electromechanical transducer unit (12) as claimed in Claim 5,
**characterized in that**
each of the magnets (16a, 16b, 16c) is essentially at the same distance from the coil (17) with the core (18).

7. Electromechanical transducer unit (12) as claimed in Claim 6,
**characterized in that**
the distance between each of the magnets (16a, 16b, 16c) and the coil (17) with the core (18) is less than 2 mm.

8. Apparatus (1) designed to determine and/or monitor at least one process variable of a medium (4) in a vessel (5), wherein said apparatus comprises at least
- a sensor unit (2) with at least an electromechanical transducer unit (12) as claimed in at least one of the previous claims, and
- an electronic unit (7),
wherein the electromechanical transducer unit (12) is designed to excite the sensor unit (2) to produce mechanical vibrations by means of an electrical excitation signal in the form of an electrical alternating current signal which is applied to the coil (17), and to receive mechanical vibrations of the sensor unit (2) and to convert them to an electrical reception signal in the form of an electrical alternating current signal, and
wherein the electronic unit (7) is designed to generate the excitation signal on the basis of the reception signal and to determine the at least one process variable at least using the reception signal.

9. Apparatus as claimed in Claim 8,
wherein the sensor unit (2) is a unit capable of vibrating (3).

10. Apparatus as claimed in at least one of the Claims 8 or 9,
wherein the unit capable of vibrating (3) comprises at least a subsection of the membrane (8, 14), or at least a subsection of the membrane (8, 14) and at least a vibrating rod (10a, 10b) fixed on the membrane.

11. Apparatus as claimed in at least one of the Claims 8 to 10,
wherein the process variable is defined by a level or the flow of the medium (4) in the vessel (5), or by the density or the viscosity of the medium (4).

12. Apparatus as claimed in at least one of the Claims 8 to 11,
wherein the unit capable of vibrating (3) is a tuning fork with two vibrating rods (10a, 10b), wherein the electromechanical transducer unit (12) comprises four rods (15a-15d), and wherein two (15a, 15b) of the four rods (15a-15d) of the electromechanical transducer unit (12) which are fixed to the membrane (8, 14) and the two vibrating rods (10a, 10b) fixed to the membrane (8, 14) are in mirror symmetry to one another in relation to the plane perpendicular to the longitudinal axis through the rods (15a, 15b) and/or are arranged opposite the vibrating rods (10a, 10b).

13. Apparatus as claimed in at least one of the Claims 8 to 11,
wherein the unit capable of vibrating (3) is a tuning fork with two vibrating rods (10a, 10b), wherein the electromechanical transducer unit (12) comprises three rods (15a-15c), and wherein the three rods (15a-15c) are arranged in the corners of an equilateral triangle extending around the center (M) of the membrane (8, 14) in such a way that the connecting line between two (15a, 15b) of the three rods (15a-15c) is parallel to a connecting line between the two vibrating rods (10a, 10b).

## Revendications

1. Unité de transducteur électromécanique (12) pour un appareil de terrain (1) de la technique d'automatisation, laquelle unité comprend au moins
- une membrane (14) pouvant être mise en vibrations mécaniques,
- au moins trois tiges (15a, 15b, 15c) qui sont fixées par adhérence à la membrane (14), perpendiculairement à une surface de base (A) de la membrane (14),
- un boîtier (13), la membrane (14) formant au moins une zone partielle d'une paroi du boîtier (13), et les tiges (15a, 15b, 15c) s'étendant à l'intérieur du boîtier,
- au moins trois aimants (16a, 16b, 16c), un aimant (16a, 16b, 16c) étant respectivement fixé à chacune des au moins trois tiges (15a, 15b, 15c) dans la zone d'extrémité opposée à la membrane (14), et
- une bobine (17) avec un noyau (18), laquelle bobine est fixée à l'intérieur du boîtier (13) au-dessus des aimants (16a, 16b, 16c), et laquelle bobine (17) peut être alimentée par un signal électrique alternatif,
la bobine (17) étant conçue pour générer un champ magnétique, lequel champ magnétique met les tiges (15a, 15b, 15c) en vibrations mécaniques perpendiculaires à l'axe longitudinal des deux tiges (10a, 10b) au moyen des aimants (16a, 16b, 16c),
les tiges (15a, 15b, 15c) étant fixées à la membrane (14) de telle sorte que les vibrations de la membrane (14) résultent des vibrations des tiges (15a, 15b, 15c),
au moins l'une des tiges (15a, 15b, 15c) étant fixée à la membrane (14) à un emplacement (22, 23) le long de la surface de base (A) de la membrane (14), emplacement (22, 23) auquel la dérivée seconde de la déviation de la membrane (14) à partir d'une position de repos, en tant que fonction de l'emplacement sur la surface de base (A), est sensiblement nulle.

2. Unité de transducteur électromécanique (12) selon la revendication 1,
**caractérisée**
**en ce qu'**au moins l'une des tiges (15a, 15b, 15c) est fixée à la membrane (14) pour l'essentiel le long d'une ligne circulaire (22) s'étendant autour du centre (M) de la surface de base (A) de ladite membrane (14).

3. Unité de transducteur électromécanique (12) selon la revendication 2,
**caractérisée**
**en ce que** le nombre de tiges (15a, 15b, 15c) est un nombre pair, lesdites tiges (15a, 15b, 15c) étant disposées symétriquement le long de la ligne circulaire (22) autour du centre (M) de la membrane (14).

4. Unité de transducteur électromécanique (12) selon la revendication 2,
**caractérisée**
**en ce que** le nombre de tiges (15a, 15b, 15c) est un nombre impair, lesdites tiges (15a, 15b, 15c) étant disposées de manière équiangulaire le long de la ligne circulaire (22) autour du centre (M) de la membrane (14).

5. Unité de transducteur électromécanique (12) selon au moins l'une des revendications précédentes,
**caractérisée**
**en ce que** la bobine (17) avec le noyau (18) est disposée pour l'essentiel au-dessus du centre (M) de la surface de base (A) de la membrane (14).

6. Unité de transducteur électromécanique (12) selon la revendication 5,
**caractérisée**
**en ce que** chacun des aimants (16a, 16b, 16c) présente sensiblement la même distance par rapport à la bobine (17) avec le noyau (18).

7. Unité de transducteur électromécanique (12) selon la revendication 6,
**caractérisée**
**en ce que** la distance entre chacun des aimants (16a, 16b, 16c) et la bobine (17) avec le noyau (18) est inférieure à 2 mm.

8. Dispositif (1) destiné à la détermination et/ou à la surveillance d'au moins une grandeur process d'un produit (4) dans un réservoir (5), lequel dispositif comprend au moins
- une unité de capteur (2) avec au moins une unité de transducteur électromécanique (12) selon au moins l'une des revendications précédentes, et
- une unité électronique (7),
l'unité de transducteur électromécanique (12) étant conçue pour exciter l'unité de capteur (2) en vibrations mécaniques au moyen d'un signal d'excitation électrique sous la forme d'un signal électrique alternatif auquel la bobine (17) est soumise, et pour recevoir les vibrations mécaniques de l'unité de capteur (2) et les convertir en un signal de réception électrique sous la forme d'un signal électrique alternatif, et
l'unité électronique (7) étant conçue pour générer le signal d'excitation sur la base du signal de réception et pour déterminer l'au moins une variable de process au moins sur la base du signal de réception.

9. Dispositif selon la revendication 8,
pour lequel l'unité de capteur (2) est une unité apte à vibrer (3).

10. Dispositif selon au moins l'une des revendications 8 ou 9,
pour lequel l'unité apte à vibrer (3) comprend au moins une partie de la membrane (8, 14), ou au moins une partie de la membrane (8, 14) et au moins une tige vibrante (10a, 10b) qui y est fixée.

11. Dispositif selon au moins l'une des revendications 8 à 10,
pour lequel la variable de process est définie par un niveau ou le débit du produit (4) dans le réservoir (5), ou par la densité ou la viscosité du produit (4).

12. Dispositif selon au moins l'une des revendications 8 à 11,
pour lequel l'unité apte à vibrer (3) est une fourche vibrante avec deux tiges vibrantes (10a, 10b), l'unité de transducteur électromécanique (12) comprenant quatre tiges (15a-15d), et deux (15a, 15b) des quatre tiges (15a-15d) étant fixées à la membrane (8, 14) de l'unité de transducteur électromécanique (12) et les deux tiges vibrantes (10a, 10b) fixées à la membrane (8, 14) étant en symétrie miroir par rapport au plan perpendiculaire à l'axe longitudinal passant par les tiges (15a, 15b) et/ou les tiges vibrantes (10a, 10b) étant disposées l'une en face de l'autre.

13. Dispositif selon au moins l'une des revendications 8 à 11,
pour lequel l'unité apte à vibrer (3) est une fourche vibrante avec deux tiges vibrantes (10a, 10b), l'unité de transducteur électromécanique (12) comprenant trois tiges (15a-15c), et les trois tiges (15a-15c) étant disposées aux sommets d'un triangle équilatéral s'étendant autour du centre (M) de la membrane (8, 14), de telle sorte que la ligne de jonction entre deux (15a, 15b) des trois tiges (15a-15c) est parallèle à une ligne de jonction entre les deux tiges vibrantes (10a, 10b).
